# EUROPÄISCHE PATENTANMELDUNG

(11) **EP 2 471 641 A1**
(43) Veröffentlichungstag der Anmeldung: **04.07.2012**
(21) Anmeldenummer: 10197185.1
(22) Anmeldetag: 28.12.2010
(51) Int. Cl.: B29B 9/12, D02G 1/00

(54) **Verfahren zur Herstellung von rieselfähigen Teilchen aus Polymerfasern**

(71) Anmelder: HD kunststoffe & Kunststofferzeugnisse GmbH, 51399 Burscheid (DE)
(72) Erfinder: Derenowski, Heinrich, 42799, Leichlingen (DE)
(74) Vertreter: Patentanwälte Freischem

(57) **Zusammenfassung**

Die vorliegende Erfindung betrifft ein Verfahren zur Herstellung von Pulver aus Polymerfaser, bei dem die Polymerfasern zu rieselfähigen Teilchen verformt werden, eine Vorrichtung zur Verformung von Faserabschnitten, das resultierende Pulver sowie die Verwendung des Pulvers.

## Beschreibung

Die vorliegende Erfindung betrifft ein Verfahren zur Herstellung von Pulver aus Polymerfaser, bei dem die Polymerfasern zu rieselfähigen Teilchen verformt werden, eine Vorrichtung zur Verformung von Faserabschnitten, das resultierende Pulver sowie die Verwendung des Pulvers.

Es hat sich bislang als schwierig herausgestellt, Schüttgut aus Polymerfasern herzustellen. Werden nämlich Polymerfasern einfach in sehr kurze Abschnitte zerschnitten, wie beispielsweise bis zu 3 mm, so wirken recht hohe elektrostatische Anziehungskräfte unter den zerschnittenen Fasern und die Fasern erreichen zum einen keine besonders hohe Schüttdichte und sind zum anderen in der Regel auch nicht rieselfähig. Insbesondere war es bislang nicht möglich, Fasern aus hochmolekularen Polymeren beispielsweise mit einem Molekulargewicht von mehr als 11.000.000 g/mol überhaupt so zu zerschneiden, dass die Eigenschaften des Polymers selbst thermisch nicht verändert wurden und insbesondere das Molekulargewicht nicht zu sehr abnahm.

Aufgabe der vorliegenden Erfindung ist es daher, eine Technologie bereit zu stellen, mit der insbesondere hochmolekulare Polymerfasern in rieselfähige Teilchen umgewandelt werden können, wobei nach Möglichkeit die physikalischen Eigenschaften des Polymers nicht wesentlich verschlechtert werden.

In einer ersten Ausführungsform wird die der Erfindung zugrundeliegende Aufgabe gelöst durch ein Verfahren zur Herstellung von rieselfähigen Teilchen aus Polymerfasern, dadurch gekennzeichnet, dass man Faserabschnitte der Polymerfasern mit einer Länge in einem Bereich von 0,1 bis 50 cm zu rieselfähigen Teilchen verformt.

Im Unterschied zur bisherigen Technologie der einfachen Zerkleinerung von Polymerfasern in möglichst kurze Abschnitte, werden mit dem erfindungsgemäßen Verfahren die Faserabschnitte nicht einfach möglichst klein zerkleinert, sondern zu rieselfähigen Teilchen verformt. Dadurch kann im Unterschied zu bisher bekannten Verfahren eine wesentlich höhere Schüttdichte und überhaupt Rieselfähigkeit hergestellt werden. Auch werden die notwendigen Schnitte pro Faserlänge deutlich reduziert, sodass die thermische Belastung durch das Schneiden (durch beispielsweise Reibungswärme) deutlich reduziert werden kann. Im Unterschied zu bisher bekannten Verfahren können so die physikalischen Eigenschaften des Polymers und insbesondere das Molekulargewicht im Wesentlichen erhalten werden. Die Fasern werden weit weniger wenn überhaupt thermisch zersetzt und das Molekulargewicht wird so wenn überhaupt wesentlich weniger als bei bekannten Verfahren reduziert.

Vorteilhafterweise setzt man als Polymerfasern thermoplastische Fasern, insbesondere Fasern aus Polyethylen oder Polypropylen ein. Gegenüber anderen Polymerfasern haben thermoplastische Fasern den besonderen Vorteil, dass diese von der deutlich reduzierten oder praktisch gar nicht vorhandenen thermischen Belastung durch das erfindungsgemäße Verfahren besonders profitieren.

Ähnlich verhält es sich bei dem Molekulargewicht der Polymerfasern. Deshalb setzt man im erfindungsgemäßen Verfahren vorteilhafterweise Polymerfasern mit einem Molekulargewicht von wenigstens 11.000.000 g/mol, insbesondere wenigstens 50.000.000 g/mol, ganz besonders bevorzugt wenigstens 70.000.000 g/mol ein. Diese Fasern lassen sich in der Regel nur mit einer erheblichen Kraft im Schneidevorgang zerschneiden. Dabei entsteht beim Schneidevorgang jedenfalls bei den bisher bekannten Verfahren eine erhebliche Wärme beispielsweise durch Reibung. Diese Polymerfasern mit einem besonders hohen Molekulargewicht profitieren also besonders von dem erfindungsgemäßen Verfahren.

Vorzugsweise verformt man die Polymerfasern durch Kräuseln, insbesondere durch Kantenziehen. Dabei werden die Faserabschnitte über eine Kante gezogen und unterliegen so einer einseitigen Streckung. Insbesondere werden die Polymerfasern derart stark gekräuselt, dass sie sich im Wesentlichen vollständig zu den rieselfähigen Teilchen zusammenkräuseln bzw. zusammenrollen. Das Kräuseln und insbesondere Kantenziehen hat den besonderen Vorteil, dass bei diesem Verfahren die Faserabschnitte nicht notwendigerweise in gestreckter Form erhalten bleiben müssen und bei dieser Verformungsart auch eine besonders niedrige thermische Belastung der Faserabschnitte stattfindet. Deshalb führt man vorzugsweise während der Verformung keine Wärme zu. Dies ist ein wesentlicher Unterschied zu dem Kräuselverfahren und insbesondere dem Kantenziehverfahren im Stand der Technik. Dort wird nämlich bewusst Wärme zugeführt, um den Kräuseleffekt zu verstärken. Beim erfindungsgemäßen Verfahren ist es jedoch besonders vorteilhaft, keine Wärme zuzuführen, da so die Faserabschnitte der Polymerfasern nicht unnötig thermisch belastet werden und die physikalischen Eigenschaften weitgehend erhalten bleiben können.

Vorzugsweise setzt man die Faserabschnitte in Bündeln von 10 bis 80, vor allem 20 bis 50, einzelnen Faserabschnitten ein. Es wurde überraschend bei der Verformung gefunden, dass so besonders leicht Teilchen durch die Verformung und vor allem durch Kräuseln oder Kantenziehen erhalten werden konnten. Eine Erklärung dafür könnte sein, dass gerade beim Kantenziehen nicht alle Fasern des Faserbündels gleichstark dem Druck der Kante ausgesetzt sind und sich so unterschiedlich dehnen und daher ähnlich wie bei einem Bimetall in Hitze das Faserbündel leichter zu Teilchen "zusammenrollt".

Das erfindungsgemäße Verfahren kommt also beispielsweise ohne Thermofixierung aus.

Beim erfindungsgemäßen Verfahren wird vorzugsweise wenigstens ein Verformungswerkzeug, insbesondere wenigstens eine Kante oder wenigstens eine Klinge, gekühlt, insbesondere mit flüssigem Stickstoff gekühlt.

Beim erfindungsgemäßen Verfahren werden vorzugsweise Faserabschnitte mit einem Durchmesser der Fasern in einem Bereich von 5 bis 50 µ, insbesondere in einem Bereich von 10 bis 25 µ eingesetzt.

Es wurde überraschend herausgestellt, dass sich Fasern mit diesem Durchmesser besonders leicht zu rieselfähigen Teilchen verformen lassen.

Die Länge der Faserabschnitte liegt vorzugsweise in einem Bereich von 1 bis 10 cm, insbesondere in einem Bereich von 1,5 bis 5 cm. Bei dieser Länge der Faserabschnitte hatte sich herausgestellt, dass diese zu einem besonders hohen Prozentsatz zu rieselfähigen Teilchen verformt werden können.

Beim erfindungsgemäßen Verfahren stellt man vorteilhafterweise insbesondere durch zusätzliche Kühlung beim Verformen eine Temperatur von höchstens 80 °C, insbesondere höchstens 60 °C ein. Dadurch kommt es zu besonders niedriger thermischer Belastung der Faserabschnitte.

Beim erfindungsgemäßen Verfahren liegt der Teilchendurchmesser beispielsweise in einem Bereich von 200 bis 2000 p, insbesondere in einem Bereich von 400 bis 1000 µ. Die Anzahl der gleichzeitig verarbeiteten Faserabschnitte bei einem einzelnen Verformungsvorgang liegt vorzugsweise in einem Bereich von 5 bis 100 Faserabschnitten, insbesondere in einem Bereich von 10 bis 50 Faserabschnitten. Dabei kann es bei der Verformung insbesondere beim Kantenziehen zu unterschiedlichen Krafteinwirkungen auf die Faserabschnitte kommen, sodass besonders leicht rieselfähige Teilchen entstehen können.

Die Kraft beim Verformen und insbesondere beim Kräuseln, die auf die Faserabschnitte einwirkt, stellt man beispielsweise so ein, dass die Faserabschnitte nach der Verformung möglichst vollständig zu rieselfähigen Teilchen verformt, und insbesondere gekräuselt sind.

Beim erfindungsgemäßen Verfahren setzt man beispielsweise Faserabschnitte aus einer Vorzerkleinerung ein. Dabei werden beispielsweise Endlosfasern oder sehr lange Fasern in Faserabschnitte mit einer Länge in einem Bereich von 0,1 bis 50 cm zertrennt. Bei dieser Vorzerkleinerung kann man beispielsweise einen üblichen Granulator einsetzen. Bei der Vorzerkleinerung können die Schneidevorrichtung oder auch andere Teile der Vorrichtung wie beispielsweise eine Welle gekühlt werden und insbesondere mit flüssigem Stickstoff gekühlt werden. Beispielsweise kann man im erfindungsgemäßen Verfahren die Welle des Vorzerkleinerers kühlen, insbesondere mit flüssigem Stickstoff kühlen. Auch kann man die übliche Mahlkammer eines Granulators beispielsweise von der üblichen Breite auf höchstens 60 % der üblichen Breite verringern. Darüber hinaus kann man beispielsweise an die Welle des Vorzerkleinerers ein Schwungrad anbringen, damit vor allem Polymerfasern mit einem hohen Molekulargewicht leichter vorzerkleinert werden können.

Bei dem erfindungsgemäßen Verfahren werden nach der Verformung vorteilhafterweise Teilchen mit einem Durchmesser und/oder Faserabschnitte mit einer Länge von mehr als 2000 p, insbesondere mit einem Durchmesser von mehr als 1000 µ abgetrennt, insbesondere mit einem Sieb abgetrennt, und nochmals der Verformung unterworfen. Dabei ist zu beachten, dass die Faserabschnitte auch schon vollständig oder zumindest teilweise zu Teilchen verformt sein können. Dazu wird beispielsweise eine Taumelsiebmaschine eingesetzt.

Vorzugsweise werden die Faserabschnitte vor der Verformung gekühlt, insbesondere mit flüssigem Stickstoff gekühlt. Ganz besonders bevorzugt werden die Faserabschnitte unmittelbar vor der Verformung gekühlt, insbesondere mit flüssigem Stickstoff gekühlt. Dadurch kann die Anstrengung unterstützt werden, dass sich die physikalischen Eigenschaften des Polymers, insbesondere das Molekulargewicht, nicht gravierend ändern und insbesondere die Faserabschnitte nicht oder kaum thermisch zersetzt werden.

Bei dem erfindungsgemäßen Verfahren stellt man beispielsweise die Verfahrensparameter und/oder Verfahrensbedingungen so ein, dass die Aufschmelztemperatur des Polymers weniger als 10 %, insbesondere höchstens 5 % abnimmt. Unabhängig davon werden die Verfahrensparameter und/oder Verfahrensbedingungen vorteilhafterweise so eingestellt, dass das Molekulargewicht höchstens 20 %, insbesondere höchstens 15 % abnimmt.

Beim erfindungsgemäßen Verfahren setzt man beispielsweise ein Polymer mit einer Dichte von wenigstens 0,9 g/mol, insbesondere wenigstens 096 g/mol ein.

In einer weiteren Ausführungsform wird die der Erfindung zugrundeliegende Aufgabe gelöst durch eine Vorrichtung zur Verformung von Faserabschnitten von Polymerfasern mit einer Länge in einem Bereich von 0,1 bis 50 cm zu rieselfähigen Teilchen, dadurch gekennzeichnet, dass in der Vorrichtung wenigstens zwei sich aneinander vorbeibewegende Klingen angeordnet sind und der Spalt zwischen den Klingen wenigstens 12% des Durchmessers der einzelnen Faserabschnitte, insbesondere wenigstens 15% des Durchmessers der einzelnen Faserabschnitte beträgt.

Im Unterschied zu Schneidevorrichtung beispielsweise durch Scherschneiden, bei denen der Schneidspalt auf üblicherweise höchstens 10 % der Materialdicke und in diesem Fall der Faserstärke eingestellt wird, wird die Vorrichtung erfindungsgemäß so eingestellt, dass der Spalt zwischen den Klingen deutlich größer ist, als es für das Schneiden sinnvoll wäre. So wurde überraschenderweise gefunden, dass eine handelsübliche Schneidevorrichtung für die Verformung im erfindungsgemäßen Verfahren hervorragend geeignet sein kann.

Vorteilhafterweise beträgt der Spalt zwischen den Klingen höchstens 70 %, insbesondere höchstens 25 % des Durchmessers der einzelnen Faserabschnitte. Dadurch kann sichergestellt werden, dass ein besonders vorteilhaft hoher Anteil an Faserabschnitten zu rieselfähigen Teilchen verformt werden kann. Vorteilhafterweise sind die Klingen auch relativ zueinander rotierenden Rädern oder Scheiben angeordnet. Besonders bevorzugt ist die Vorrichtung im Prinzip eine Scheibenmühle. Dadurch kann eine sehr hohe Taktfrequenz der Verformung erreicht werden. Bei der so ausgestalteten erfindungsgemäßen Vorrichtung kann beispielsweise ein Rad oder eine Scheibe feststehend sein. Auch können auf jedem Rad oder jeder Scheibe unabhängig voneinander beispielsweise wenigstens 20 Klingen angeordnet sein.

Besonders bevorzugt ist wenigstens ein Rad oder wenigstens eine Scheibe austauschbar, damit die Standzeiten bei Verschleiß der Klingen minimiert werden kann.

In der erfindungsgemäßen Vorrichtung ist wenigstens ein Rad oder eine Scheibe gekühlt, insbesondere mit flüssigem Stickstoff gekühlt.

In einer weiteren Ausführungsform wird die der Erfindung zugrundeliegende Aufgabe gelöst durch rieselfähige Teilchen, hergestellt nach dem erfindungsgemäßen Verfahren, dadurch gekennzeichnet, dass das Molekulargewicht wenigstens 11.000.000 g/mol, insbesondere wenigstens 50.000.000 g/mol beträgt. Besonders bevorzugt beträgt das Molekulargewicht der Teilchen wenigstens 70.000.000 g/mol.

Im Stand der Technik ist es bislang nicht gelungen, hochmolekulare Polymerfasern zu Teilchen zu verarbeiten, die auch rieselfähig sind. Der Vorteil der erfindungsgemäßen rieselfähigen Teilchen ist daher eben deren Rieselfähigkeit.

Die erfindungsgemäßen rieselfähigen Teilchen zeichnen sich vorteilhafterweise dadurch aus, dass das Molekulargewicht im Vergleich zum Molekulargewicht der Faserabschnitte um höchstens 15 %, insbesondere um höchstens 10 % abgenommen hat. Bisherige Zerkleinerungsverfahren waren dadurch limitiert, dass das Molekulargewicht der Fasern deutlicher in Mitleidenschaft gezogen wurde.

Die Aufschmelztemperatur der erfindungsgemäßen rieselfähigen Teilchen beträgt beispielsweise wenigstens 130 °C, insbesondere wenigstens 133 °C. Die Schüttdichte der rieselfähigen Teilchen liegt vorteilhafterweise in einem Bereich von 300 bis 800 g/l, insbesondere in einem Bereich von 500 bis 650 g/l. Diese Eigenschaft von rieselfähigen Teilchen kann erstmals demonstriert werden.

Der Teilchendurchmesser der rieselfähigen Teilchen liegt vorzugsweise in einem Bereich von 200 bis 2000 µ, insbesondere in einem Bereich von 400 bis 1000 µ. Ein solcher Teilchendurchmesser unterstützt die Rieselfähigkeit im Vergleich zu den aus dem Stand der Technik bekannten zerschnittenen Fasern. Die Länge und Breite und Höhe der rieselfähigen erfindungsgemäßen Teilchen weichen voneinander vorteilhafterweise höchstens um 50 % ab. Dadurch unterscheiden sich die erfindungsgemäßen rieselfähigen Teilchen deutlich von den aus dem Stand der Technik zerschnittenen Fasern, die eine erhebliche Längsausrichtung haben und dadurch gerade nicht rieselfähig sind.

Die Rieselfähigkeit der erfindungsgemäßen Teilchen beträgt vorzugsweise höchstens 60 Sekunden, insbesondere höchstens 30 Sekunden und ganz besonders bevorzugt höchstens 20 Sekunden bei einer Trichterdüse von 10 mm und 150 g Prüfgut. Die Rieselfähigkeit kann nach der Norm DIN EN ISO 6186 (vgl. auch DIN 53492) verformt werden.

In einer letzten Ausführungsform wird die der Erfindung zugrundeliegende Aufgabe gelöst durch die Verwendung der erfindungsgemäßen rieselfähigen Teilchen als Füllstoff oder als Ausgangsmaterial für Extrusionsverfahren oder Thermoverpressung.

### Ausführungsbeispiel:

Dyneema® SK78 Faser der Firma DSM wurde mit Hilfe eines Granulators (Ultragranulator, Firma Pallmann) in 3 cm lange Faserabschnitte zerteilt. Beim Granulator wurde die Welle mit flüssigem Stickstoff gekühlt. Auch wurde die Faser vor der Zerteilung mit flüssigem Stickstoff gekühlt. An der Welle des Granulators war ein Schwunggrad angebracht und die Mahlkammer wurde auf 60 % der üblichen Größe verkleinert. Nach dem Schneidevorgang wurden Bündel von jeweils 30 Faserabschnitten gebildet, die erneut mit flüssigem Stickstoff gekühlt wurden, bevor sie in einer Scheibenmühle (Typ PKM 800, Firma Pallmann) so gekräuselt wurden, dass die Faserbündel vollständig zu rieselfähigen Teilchen mit einem mittleren Durchmesser von 800 µ zusammengekräuselt wurden. Der Spalt zwischen den Klingen wurde dabei auf eine Breite von 10 µ eingestellt. Die feststehende Scheibe der Scheibenmühle wurde von ihrer Rückseite her mit flüssigem Stickstoff gekühlt. Die Temperatur wurde überwacht und so eingestellt, dass 50 °C nicht überschritten wurden. Die verformten Teilchen wurden mit einer handelsüblichen Taumelsiebmaschine so gesiebt, dass Teilchen mit einem Teilchendurchmesser von mehr als 900 µ dem Verformungsprozess wieder zugeführt wurden. Die übrigen Teilchen wurden für den Versand in Bigpacks abgefüllt.

Eine Analyse der Teilchen ergab, dass die Aufschmelztemperatur wenigstens 133 °C betrug und das Molekulargewicht der erhaltenen Teilchen bei wenigstens 70.000.000 g/mol lag. Die Rieselfähigkeit betrug bei einer Trichterdüse von 10 mm Durchmesser und 150 g Prüfgut etwa 17 Sekunden nach DIN EN ISO 6186.

Die erhaltenen rieselfähigen Teilchen wurden anschließend durch Thermoverpressung bei einer Temperatur von 130 °C zu 5 mm starken Platten verarbeitet.

## Patentansprüche

1. Verfahren zur Herstellung von rieselfähigen Teilchen aus Polymerfasern, **dadurch gekennzeichnet, dass** man Faserabschnitte der Polymerfasern mit einer Länge in einem Bereich von 0,1 bis 50 cm zu rieselfähigen Teilchen verformt.

2. Verfahren gemäß Anspruch 1, **dadurch gekennzeichnet, dass** man als Polymerfasern thermoplastische Fasern, insbesondere Fasern aus Polyethylen oder Polypropylen einsetzt.

3. Verfahren gemäß einem der Ansprüche 1 bis 2, **dadurch gekennzeichnet, dass** man Polymerfasern mit einem Molekulargewicht von wenigstens 11.000.000 g/mol, insbesondere wenigstens 50.000.000 g/mol einsetzt.

4. Verfahren gemäß einem der Ansprüche 1 bis 3, **dadurch gekennzeichnet, dass** man die Polymerfasern durch Kräuseln, insbesondere durch Kantenziehen verformt.

5. Verfahren gemäß einem der Ansprüche 1 bis 4, **dadurch gekennzeichnet, dass** man während der Verformung keine Wärme zuführt.

6. Vorrichtung zur Verformung von Faserabschnitten von Polymerfasern mit einer Länge in einem Bereich von 0,1 bis 50 cm zu rieselfähigen Teilchen, **dadurch gekennzeichnet, dass** in der Vorrichtung wenigstens zwei sich aneinander vorbeibewegende Klingen angeordnet sind und der Spalt zwischen den Klingen wenigstens 12% des Durchmessers der einzelnen Faserabschnitte, insbesondere wenigstens 15% des Durchmessers der einzelnen Faserabschnitte beträgt.

7. Vorrichtung gemäß Anspruch 6, **dadurch gekennzeichnet, dass** die Klingen auf relativ zueinander rotierenden Rädern oder Scheiben angeordnet sind, insbesondere die Vorrichtung eine Scheibenmühle ist.

8. Vorrichtung gemäß Anspruch 7, **dadurch gekennzeichnet, dass** wenigstens ein Rad oder eine Scheibe gekühlt sind.

9. Rieselfähige Teilchen, hergestellt nach dem Verfahren gemäß einem der Ansprüche 1 bis 5, **dadurch gekennzeichnet, dass** das Molekulargewicht wenigstens 11.000.000 g/mol, insbesondere wenigstens 50.000.000 g/mol beträgt.

10. Verwendung der rieselfähigen Teilchen gemäß Anspruch 9 als Füllstoff oder als Ausgangsmaterial für Extrusionsverfahren oder Thermoverpressung.
